# EUROPEAN PATENT SPECIFICATION

(11) **EP 3 360 123 B1**
(45) Date of publication and mention of the grant of the patent: **11.12.2019**
(21) Application number: 15778912.4
(22) Date of filing: 08.10.2015
(51) Int. Cl.: G08G 1/01, H04W 4/90, H04W 4/02, H04W 4/06, G08G 1/0967, G08G 1/16

(54) **LOCAL AND GLOBAL MESSAGE DISTRIBUTION POLICY IN AN INTELLIGENT TRANSPORT SYSTEM USING WIRELESS COMMUNICATIONS**
RICHTLINIEN FÜR LOKALE UND GLOBALE NACHRICHTENVERTEILUNG IN EINEM INTELLIGENTEN TRANSPORTSYSTEM MIT DRAHTLOSER KOMMUNIKATION
RÈGLE DE DISTRIBUTION LOCALE ET GLOBALE DE MESSAGE DANS UN SYSTÈME DE TRANSPORT INTELLIGENT À L'AIDE DE COMMUNICATIONS SANS FIL

(43) Date of publication of application: 15.08.2018
(73) Proprietor: Huawei Technologies Co., Ltd., Longgang District Shenzhen, Guangdong 518129 (CN)
(72) Inventor: AYAZ, Serkan, 80992 Munich (DE); HU, Liang, 80992 Munich (DE); DILLINGER, Markus, 80992 Munich (DE)
(74) Representative: Gill Jennings & Every LLP
(86) International application number: PCT/EP2015/073225
(87) International publication number: WO 2017/059913

(56) References cited:
- EP-A1- 2 763 449
- US-A1- 2013 203 372

## Description

### TECHNICAL FIELD

Generally, the present invention relates to wireless communications. More specifically, the present invention relates to a communication entity associated with a base station and a method of operating such a communication entity.

### BACKGROUND

In the current LTE architecture, the evolved Multimedia Broadcast Multicast Services (eMBMS) architecture is designed for supporting multicast/broadcast applications, such as IPTV, Broadcast file delivery, Live Audio/Video Streaming and the like. It is not designed for Intelligent Transport Systems (ITS) scenarios (i.e., safety and efficiency of transportation systems) which require low latency and high reliability. In the current LTE architecture, the traffic is sent by a provider (e.g. TV operator) to a BM-SC and then it is delivered to MBMS-GW which performs multicasting operation on the received traffic. Normally, the MBMS-GW is located in the core network which may be very distant from the edge domain where base stations are located. Thus, there is always a considerable delay between the core and the edge of the network which makes the architecture not suitable for delay sensitive applications, such as ITS applications.

US2014/0309812A1 discloses a system and method of allowing a local Driving Assistance Service (DAS) center within a base station to provide a DAS to a vehicle by using a communication network. The method includes receiving, from a vehicle terminal, local DAS information and surrounding information of the vehicle, generating Analyzed-local (A-local) DAS information by using the received local DAS information, and transmitting, when the DAS is provided by using the generated A-local DAS information, the A-local DAS information to the vehicle terminal.

WO2014/017789A1 discloses a method and system for broadcast or multicast of multimedia content, cached locally at various wireless cellular network nodes using a Multimedia Broadcast Multicast Services (MBMS). The wireless cellular network node can be a Radio Access Node (RAN) node, a Serving Gateway (SGW) or a Packet Data Network Gateway (PGW). The method provides a cached content manager with control interfaces that enable the cached content manager to initiate an MBMS session for delivery of locally cached multimedia content. The MBMS session can also be initiated by a User Equipment (UE) or by a Broadcast Multicast Service Centre (BMSC).

US2013203372A1 discloses a base station 110a which upon receiving an emergency message from one of its served terminals 10a, determines that this is an emergency message and therefore forwards it to further terminals 10b-10d under its coverage. The base station 110a also forwards this message to another base station 110', so that further terminals may become aware of the emergency situation.

EP2763449A1 discloses a first eNB which acquires an alarm event EM (emergency message) information reported by a UE. The first eNB sends an EM notification that includes the EM information to at least one eNB that needs to be notified of the EM information, so that the at least one eNB sends the EM notification to a UE of the at least one eNB.

Although some of the above approaches already provide some improvements, there is still a need for an improved network architecture and corresponding network components supporting time-critical and delay sensitive applications, such as ITS applications.

### SUMMARY

The invention is defined by the appended set of claims. is an object of the invention to provide a communication entity and a method of operating such a communication entity, in particular for supporting time-critical and delay sensitive applications, such as ITS applications, in a communication network.

The foregoing and other objects are achieved by the subject matter of the independent claims. Further implementation forms are apparent from the dependent claims, the description and the figures.

According to a first aspect, the invention relates to a communication entity associated with a base station, wherein the communication entity is configured to communicate with at least one user equipment of a plurality of user equipments within the service area of the base station and a plurality of further communication entities being associated with a plurality of base stations. The communication entity comprises an analyzer configured to analyze the content and/or type of a message received by the base station, a local message distributor configured to adopt a local message distribution policy for distributing the message to the at least one user equipment on the basis of the content and/or type of the message, and a global message distributor configured to adopt a global message distribution policy for distributing the message to at least one of the plurality of further communication entities on the basis of the content and/or type of the message.

Adopting a local message distribution policy by the local message distributor and a global message distribution policy by the global message distributor on the basis of the content and/or type allows for a fast and efficient message-specific distribution of different messages within a communication network. Thus, the proposed solution provides intelligence at the edge of the network, i.e. close to the user equipments, resulting in the low latency required, for instance, for ITS applications.

The communication entity can be a software module implemented on the base station associated with the communication entity or a dedicated communication apparatus in communication with the base station. The local message distribution policy can be a unicast, a multicast and/or a broadcast distribution of the message. The global message distribution policy can be a unicast, a multicast or a broadcast distribution of the message.

In a first possible implementation form of the communication entity according to the first aspect, the analyzer is configured to analyze the content and/or type of a message received by the base station from one of the plurality of user equipments or from one of the plurality of further communication entities.

Advantageously, the communication entity is configured to distribute messages from user equipments as well as messages from other communication entities like the communication entity.

In a second possible implementation form of the communication entity according to the first aspect as such or the first implementation form thereof, the local message distributor is configured to adopt a local message distribution policy by distributing the message periodically or event-based to at least one of the plurality of user equipments.

Depending on the type and/or content of a message the communication entity can decide to distribute a message locally periodically or event-based. This allows adopting a more flexible local distribution policy.

In a third possible implementation form of the communication entity according to the first aspect as such or the first or second implementation form thereof, the local message distributor is configured to adopt a local message distribution policy by assigning a priority to the message and by distributing the message on the basis of the priority of the message.

Advantageously, highly time-critical messages can be distributed by the communication entity with high priority.

In a fourth possible implementation form of the communication entity according to the first aspect as such or any one of the first to third implementation form thereof, the local message distributor is configured to allocate radio resources of the base station on the basis of the local message distribution policy adopted by the local message distributor.

By allocating radio resources on the basis of the local message distribution policy adopted by the local message distributor interferences between radio resources allocated to different messages can be avoided.

In a fifth possible implementation form of the communication entity according to the first aspect as such or any one of the first to fourth implementation form thereof, the global message distributor is further configured to retrieve information from a network management system about the locations and/or service areas of the further base stations and to adopt the global message distribution policy on the basis of the locations and/or service areas of the further base stations.

This allows to assess for which further user equipments a message might be of value and to distribute the message accordingly.

In a sixth possible implementation form of the communication entity according to the first aspect as such or any one of the first to fifth implementation form thereof, the local message distributor and/or the global message distributor is further configured to coordinate the global message distribution policy with a multi-cell/multicast coordination entity (MCE).

This allows for an easy implementation in existing LTE architecture.

In a seventh possible implementation form of the communication entity according to the first aspect as such or any one of the first to sixth implementation form thereof, the global message distributor is further configured to forward the message to a further user equipment of the plurality of user equipments within the service area of the base station associated with the communication entity and to instruct the further user equipment to forward the message to a further communication entity associated with a further base station.

This implementation form allows a user equipment to act as a relay station.

In an eighth possible implementation form of the communication entity according to the first aspect as such or any one of the first to seventh implementation form thereof, the message is an ITS message, in particular a cooperative awareness message (CAM) or a decentralized environmental notification message (DENM), wherein the message includes the following information: the location of the at least one user equipment, an identifier of the at least one user equipment, the direction of motion of the at least one user equipment, the speed of the at least one user equipment and/or information about the ITS services the at least one user equipment has subscribed to.

In a ninth possible implementation form of the communication entity according to the seventh or eighth implementation form of the first aspect, the communication entity is further configured to retrieve a user profile associated with the at least one user equipment.

In a tenth possible implementation form of the communication entity according to the ninth implementation form of the first aspect, the user profile associated with the at least one user equipment is communicated along with the message and wherein the user profile defines the ITS services the at least one user equipment has subscribed to.

This provides an efficient way of providing a user profile associated with a user equipment to the communication entity.

In an eleventh possible implementation form of the communication entity according to the ninth or tenth implementation form of the first aspect, the global message distributor is further configured to distribute the user profile to at least one of the plurality of further communication entities and to adopt a global message distribution policy for distributing the message to at least one of the plurality of further communication entities on the basis of the type of the message and the user profiles available at the communication entity.

According to a second aspect, the invention relates to a communication network comprising a plurality of communication entities according to the first aspect or any implementation form thereof, wherein each communication entity is associated with a respective base station and wherein the plurality of base stations are configured to communicate by means of respective X2-C interfaces and respective X2-D interfaces with each other. The communication network further comprises a plurality of first interfaces, wherein each first interface is configured to establish a control data communication channel between a respective communication entity and its associated base station, and a plurality of second interfaces, wherein each second interface is configured to establish a user data communication channel between a respective communication entity and its associated base station.

According to a third aspect the invention relates to a method of operating a communication entity associated with a base station. The method comprises the steps of analyzing the content and/or type of a message received by the base station, adopting a local message distribution policy for distributing the message to at least one user equipment of a plurality of user equipments on the basis of the content and/or type of the message, and adopting a global message distribution policy for distributing the message to at least one of a plurality of further communication entities on the basis of the content and/or type of the message, wherein each further communication entity is associated with a respective further base station.

According to a fourth aspect the invention relates to a computer program comprising program code for performing the method according to the third aspect of the invention when executed on a computer.

The invention can be implemented in hardware and/or software.

### BRIEF DESCRIPTION OF THE DRAWINGS

Further embodiments of the invention will be described with respect to the following figures, in which:
Fig. 1 shows a schematic diagram illustrating a communication network including a communication entity according to an embodiment;
Fig. 2 shows a schematic diagram illustrating steps of a method of operating a communication entity according to an embodiment;
Figs. 3a-c show schematic diagram illustrating exemplary implementation scenarios of the communication entity of figure 1 according to different embodiments;
Fig. 4 shows a diagram illustrating a signaling exchange between a communication entity according to an embodiment and a network management system;
Fig. 5 shows a schematic diagram illustrating a network configuration for providing user profiles to a communication entity according to an embodiment;
Fig. 6 shows a diagram illustrating a signaling exchange during an initial attachment of an user equipment according to an embodiment;
Figs. 7a and 7b show a diagram illustrating a signaling exchange during the distribution of messages among two communication entities according to an embodiment;
Fig. 8 shows a diagram illustrating a signaling exchange for user synchronization between two communication entities according to an embodiment;
Fig. 9 shows a diagram illustrating a signaling exchange involving a communication entity according to an embodiment; and
Fig. 10 shows a schematic diagram illustrating an exemplary scenario involving a communication entity according to an embodiment.

### DETAILED DESCRIPTION OF EMBODIMENTS

In the following detailed description, reference is made to the accompanying drawings, which form a part of the disclosure, and in which are shown, by way of illustration, specific aspects in which the present invention may be practiced. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

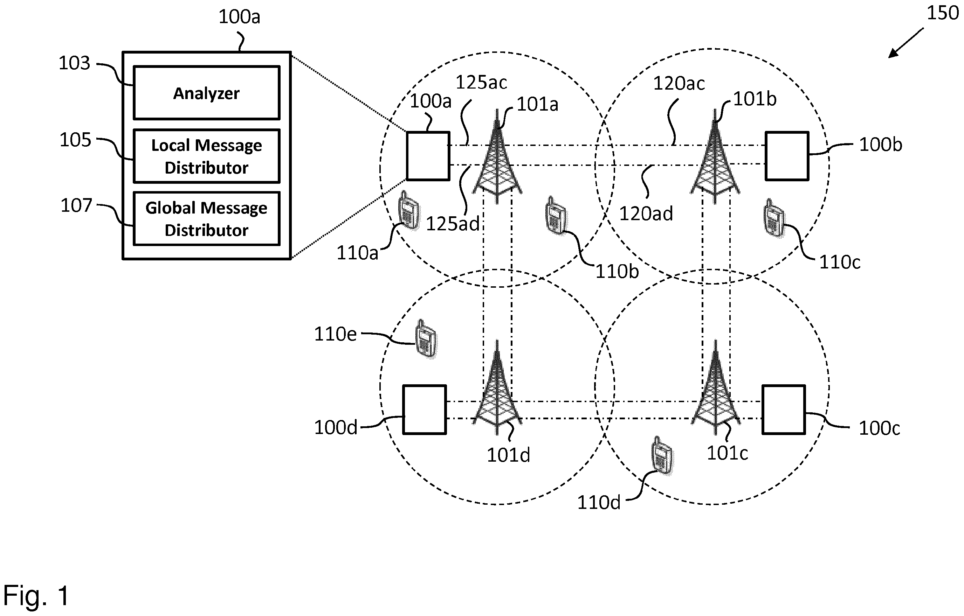

Figure 1 shows a schematic diagram of a communication network 150 including a communication entity 100a according to an embodiment. The communication entity 100a is associated with a base station 101a. In an embodiment, the communication entity 100a is a software module implemented on the base station 101a. In an embodiment, the communication entity 100a can be a dedicated communication apparatus in communication with the base station 101a.

As will be explained in more detail further below, the communication entity 100a can be configured to communicate with the base station 101a via a first interface 125ac providing a control data communication channel and a second interface 125ad providing a user data communication channel between the communication entity 100a and the base station 101a.

In an embodiment, the first interface 125ac providing a control data communication channel between the communication entity 100a and the base station 101a is configured to be used for a registration of an user equipment. Moreover, the first interface 125ac providing a control data communication channel between the communication entity 100a and the base station 101a can be used for different communication entities communicating with each other, for instance, in case a user equipment registration is synchronized between different communication entities, as will be explained in more detail further below.

As can be taken from the enlarged view in figure 1, the communication entity 100a comprises an analyzer 103 configured to analyze the content and/or type of a message received by the base station 101a, a local message distributor 105 configured to adopt a local message distribution policy for distributing the message to at least one user equipment of a plurality of user equipments 110a, b within the service area of the base station 101a on the basis of the content and/or type of the message, and a global message distributor 107 configured to adopt a global message distribution policy for distributing the message to at least one of a plurality of further communication entities 100b-d on the basis of the content and/or type of the message. As illustrated in figure 1, each further communication entity 100b-d is associated with a respective further base station 101b-d. Each further base station 101b-d defines a respective service area and can communicate with any user equipments within its service area, such as the user equipments 110c-e shown in figure 1.

As shown in figure 1, the plurality of base stations 101a-d are configured to communicate with each other by means of a plurality of control data and user data interfaces. For the sake of clarity not all the control data and user data interfaces are shown in figure 1 and only the control data and user data interfaces between the base station 101a and the base station 101b have been identified by means of reference signs, namely the control data interface 120ac and the user data interface 120ad between the base station 101a and the base station 101b. In an embodiment, the plurality of control data and user data interfaces between the plurality of base stations 101a-d are implemented in the form of X2-C and X2-D interfaces, respectively.

In an embodiment, the following additional control plane interfaces can be implemented in the context of the communication network 150 shown in figure 1. An interface between a communication entity and a Multi-Cell/Multicast Coordination Entity (MCE) used for coordinating eMBMS resource blocks (RBs). An interface between a communication entity and a network management system (NMS) used for obtaining information about the ranges of service areas and the locations of other neighboring base stations, as will be explained in more detail further below.

In an embodiment, an additional data plane interface can be implemented in the context of the communication network 150 shown in figure 1 in the form of an interface between a communication entity and the network infrastructure of a public authority, such as a police server, a traffic management server and the like.

Since each communication entity is collocated with a base station and communicates with other neighboring communication entities, in an embodiment the communication network 150 can be a fully distributed meshed architecture on the ground network. In an alternative embodiment, the plurality of base stations and the plurality of collocated communication entities can define a star network topology or any other network topology.

As already mentioned above, the communication between base stations can be mainly performed via X2-C and X2-D interfaces between the base stations. In case one of the base station (and the associated communication entity) belongs to a different operator, a new interface can be defined between base stations belonging to different operators. Furthermore, it is also possible to consider a certain hierarchical architecture with different levels of communication entities.

In an embodiment, the communication entity 100a can receive messages from the user equipments 110a, b within the service area of the associated base station 101a or from one of the further communication entities 100b-d. Thus, in an embodiment, the analyzer 103 is configured to analyze the content and/or type of a message received by the base station 101a from one of the plurality of user equipments 110a, b or from one of the plurality of further communication entities 100b-d.

In an embodiment, the local message distributor 105 is configured to adopt a local message distribution policy by distributing the message periodically or event-based to at least one of the plurality of user equipments 110a, b.

In an embodiment, the local message distributor 105 is configured to adopt a local message distribution policy by assigning a priority to the message and by distributing the message on the basis of the priority of the message.

In an embodiment, the local message distributor 105 is configured to allocate radio resources of the base station 101a on the basis of the local message distribution policy adopted by the local message distributor 105. In an embodiment, the local message distributor 105 is configured to manage uplink and downlink data channels provided by the base station 101a. In addition, depending on the ITS service, the local message distributor 105 of the communication entity 100a can be configured to manage sidelink data channels by selecting of a sidelink frequency band, resource blocks and/or timeslots. In a further embodiment, the local message distributor 105 of the communication entity 100a can be configured to perform link adaptation, such as selection of modulation and coding, and power control.

In an embodiment, the global message distributor 107 is further configured to retrieve information from a network management system about the locations and/or service areas of the further base stations 101b-d and to adopt the global message distribution policy on the basis of the locations and/or service areas of the further base stations 101b-d. In an embodiment, the network management system can be provided by a backend system in communication with the communication network 150.

In an embodiment, the local message distributor 105 and/or the global message distributor 107 is further configured to coordinate the local and/or the global message distribution policy with a multi-cell/multicast coordination entity (MCE). In an embodiment the MCE can be connected to the base station 101a by means of a M2 interface.

As will be described in more detail further below, in an embodiment, the global message distributor 107 is further configured to forward the message to a further user equipment, for instance the user equipment 110b shown in figure 1, within the service area of the base station 101a associated with the communication entity 100a and to instruct the further user equipment 110b to forward the message to a further communication entity, for instance the communication entity 100b associated with the further base station 101b, once the further user equipment 110b enters the service area of the further base station 101b.

In an embodiment, the message is an "Intelligent Transport Systems" (ITS) message, in particular a cooperative awareness message (CAM) or a decentralized environmental notification message (DENM), wherein the message can include at least one of the following information: the location of the at least one user equipment 110a, b, an identifier of the at least one user equipment 110a, b, the direction of motion of the at least one user equipment 110a, b, the speed of the at least one user equipment 110a, b and/or information about the ITS services the at least one user equipment 110a, b has subscribed to.

In an embodiment, the communication entity 100a is further configured to retrieve a user profile associated with the at least one user equipment 110a, b.

In an embodiment, the user profile associated with the at least one user equipment 110a, b is communicated along with the message and wherein the user profile defines the ITS services the at least one user equipment 110a, b has subscribed to.

In an embodiment, the global message distributor 107 is further configured to distribute the user profile to at least one of the plurality of further communication entities 100b-d and to adopt a global message distribution policy for distributing the message to at least one of the plurality of further communication entities 100b-d on the basis of the type of the message and the user profiles available at the communication entity 100a.

In an embodiment, the global message distributor 107 is further configured to forward the message to a further user equipment 110b of the plurality of user equipments 110a, b within the service area of the base station 101a associated with the communication entity 100a and to instruct the further user equipment 110b to forward the message to a further communication entity 100b associated with a further base station 101b, once the further user equipment is within the service area of the further base station 110b.

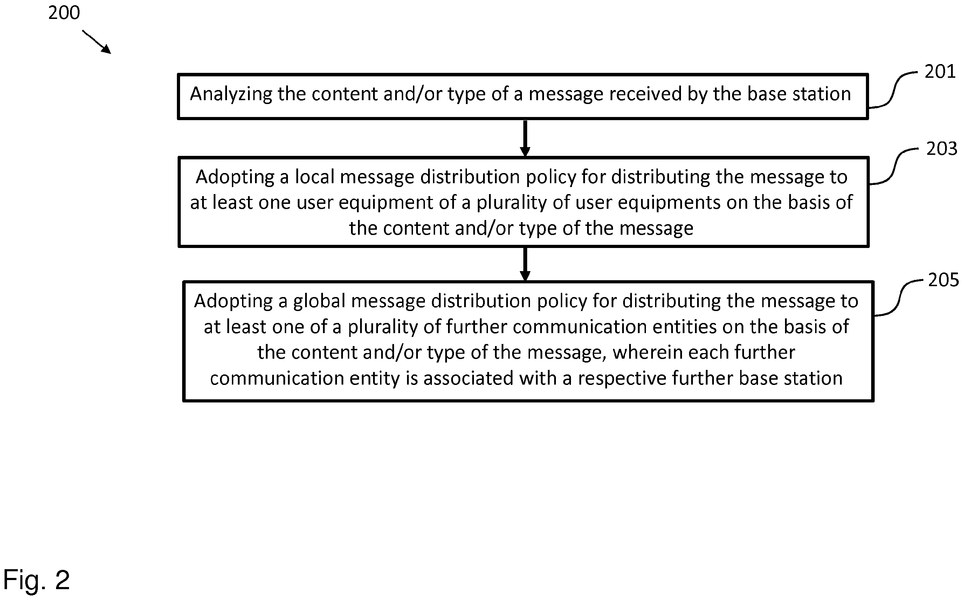

Figure 2 shows a schematic diagram illustrating steps of a method 200 of operating the communication entity 100a according to an embodiment. The method 200 comprises a first step 201 of analyzing the content and/or type of a message received by the base station 101a associated with the communication entity 100a. The method 200 comprises a second step 203 of adopting a local message distribution policy for distributing the message to at least one user equipment of a plurality of user equipments 110a, b on the basis of the content and/or type of the message. The method 200 comprises a third step 205 of adopting a global message distribution policy for distributing the message to at least one of a plurality of further communication entities 100b-d on the basis of the content and/or type of the message, wherein each further communication entity 100b-d is associated with a respective further base station 101b-d.

In the following, further implementation forms, embodiments and aspects of the communication entity 100a and the method 200 will be described.

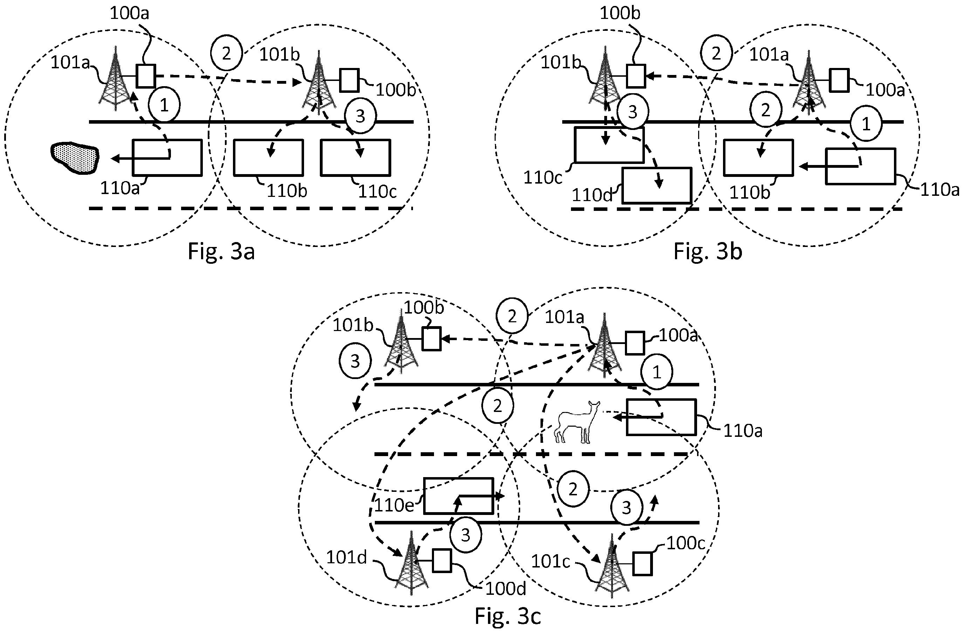

Figures 3a-c show exemplary scenarios, where the communication entity 100a and the method 200 can be advantageously employed in the field of ITS applications, where at least some of the plurality of user equipments are implemented in the form of vehicles or as part of a vehicle, such as in form of a LTE module.

Figure 3a shows a first exemplary scenario, where the vehicle 110a experiences bad road conditions, such as an icy road, and sends this information as part of a message to the base station 101a and the communication entity 100a associated therewith. On the basis of the content and/or the type of the message received from the vehicle 110a the communication entity 100a adopts a local and/or a global distribution policy for distributing the message received from the vehicle 110a. As the bad road conditions primarily affect further vehicles behind the vehicle 110a, the communication entity 100a in the example shown in figure 3a can adopt a global distribution policy by means of which the message received from the vehicle 110a is forwarded to further base stations and communication entities, which are located along the road in a direction opposite to the direction of the traffic on the road, such as the base station 101b and the communication entity 100b. In response to receiving the message about the bad road conditions ahead from the communication entity 100a the communication entity 100b, in turn, can adopt on the basis of the content and/or type of the message a local distribution policy for distributing the information about the bad road conditions ahead to the relevant vehicles within the service area of the base station 101b. The local distribution policy adopted by the communication entity 100b could be a unicast, multicast or broadcast forwarding of the message.

Figure 3b shows a second exemplary scenario, where the vehicle 110a, for instance an ambulance in case of an emergency, needs the vehicles in front of it to form a corridor. To this end, the vehicle 110a sends a corresponding message to the base station 101a and the communication entity 110a associated therewith. On the basis of the content and/or the type of the message received from the vehicle 110a the communication entity 100a adopts a local and/or a global distribution policy for distributing the message received from the vehicle 110a. As the corridor has to be formed by the vehicles ahead of the vehicle 110a, the communication entity 100a in the example shown in figure 3b can adopt a global distribution policy by means of which the message received from the vehicle 110a is forwarded to further base stations and communication entities, which are located along the road in the direction of the traffic on the road, such as the base station 101b and the communication entity 100b. Moreover, as some of the vehicles being ahead of the vehicle 110a could be located in the service area of the base station 101a as well, the communication entity 100a can also adopt local distribution policy by means of which the message received from the vehicle 110a is distributed to vehicles within the service area of the base station 101a, such as the vehicle 110b shown in figure 3b. In response to receiving the message about the vehicle 110a requiring a corridor from the communication entity 100a the communication entity 100b, in turn, can adopt on the basis of the content and/or type of the message a local distribution policy for distributing the information about the vehicle 110a requiring a corridor to the relevant vehicles within the service area of the base station 101b. The local distribution policy adopted by the communication entity 100b could be a unicast, multicast or broadcast forwarding of the message.

Figure 3c shows a third exemplary scenario, where the vehicle 110a or the driver of the vehicle 110a notices an animal crossing the road in front of the vehicle 110a and sends this information as part of a message to the base station 101a and the communication entity 100a associated therewith. On the basis of the content and/or the type of the message received from the vehicle 110a the communication entity 100a adopts a local and/or a global distribution policy for distributing the message received from the vehicle 110a. As the animal crossing the road might be dangerous for further vehicles on both sides of the road, the communication entity 100a in the example shown in figure 3a can adopt a global distribution policy by means of which the message received from the vehicle 110a is forwarded along with the position of the vehicle 110a to further base stations and communication entities, which are located on both sides of the road, such as the base stations 101b-d and the communication entities 100b-d associated therewith. In response to receiving the message about the animal crossing the road from the communication entity 100a along with the position of the vehicle 110a the communication entities 100b-d, in turn, can adopt on the basis of the content and/or type of the message a local distribution policy for distributing the information about the animal crossing the road to the relevant vehicles within the service areas of the base stations 101b-d. The respective local distribution policy adopted by the communication entities 100b-d could be a unicast, multicast or broadcast forwarding of the message.

In an embodiment, different ITS applications can be ground in the following way. Group 1: Legacy ITS services (CAM and DENM) that are periodic and broadcast. Group 2: Sensor data exchange (e.g., trajectory exchange) that are periodic and multicast/broadcast. Group 3: See-through video transmission that is streaming unicast/multicast. In an embodiment, these services can be grouped into different emergency classes (EC), such as Group 1: EC1, Group 2: EC2 and Group 3: EC3. As already described above, when the communication entity 100a receives a message containing time-critical data, it can assign certain priorities (depending on the emergency level) to the message and direct the radio resource management (RRM) unit of the associated base station 101a accordingly. In an embodiment, it can be assumed that ITS services will be provided in a dedicated spectrum by a certain ITS service provider (SP) in the country. The ITS SP may make use of a different portion of whole infrastructure of the network operator depending on the coverage of the operator (i.e., multi-operator concept, Operator A for region X and Operator B for region Y).

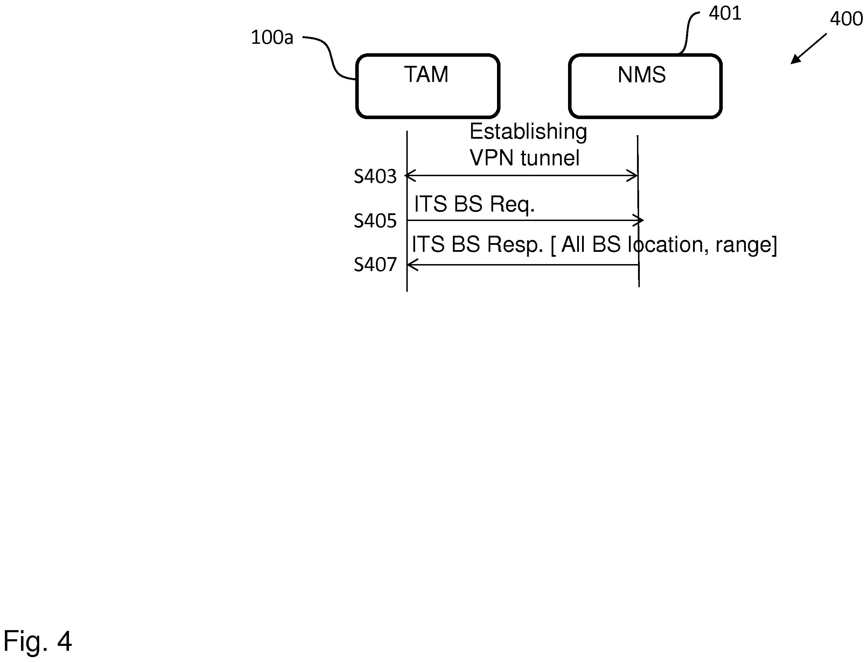

Figure 4 shows a diagram illustrating a signaling exchange 400 between a communication entity in the form of a traffic area manager 100a (hereinafter also referred to as TAM or ITS SP TAM) according to an embodiment and a network management system (NMS) 401. In an embodiment, each TAM of the network, such as the TAM 110a shown in figure 4, can communicate with the NMS 401 in order to obtain information about the ranges of the service areas and the locations information of base stations in a certain region (see steps S405 and S407 of figure 4). In an embodiment and as already described above, this information can be used by the global message distributor 107 of the TAM 100a during the ITS information distribution among different TAMs. This information is gathered from the NMS 400 with a signaling exchange protected with a Virtual Private Network (VPN) tunnel (see step S403 of figure 4).

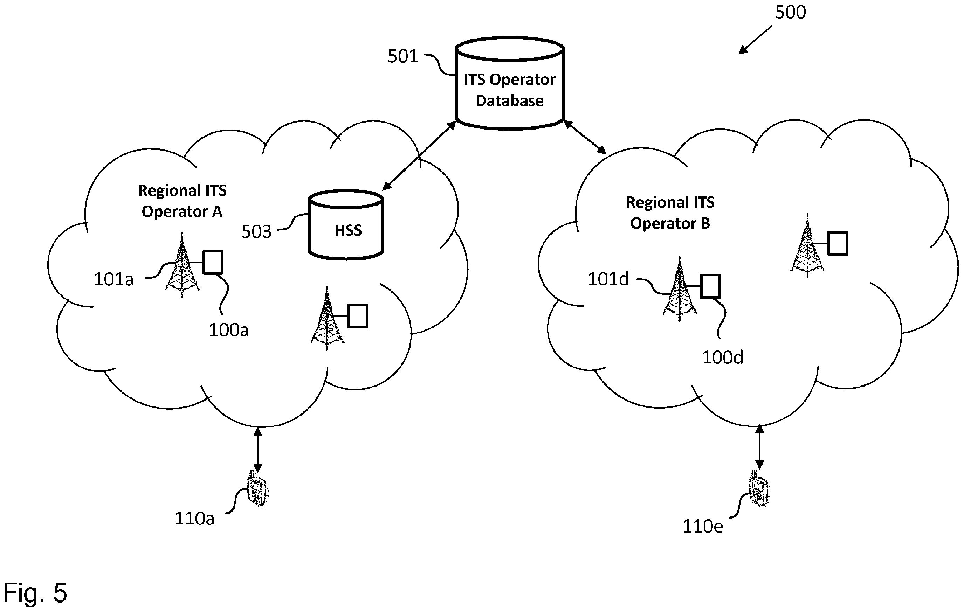

During the initial attachment, an user equipment (UE), such as a vehicle, searches the regional ITS SP and requests attachment. As shown in figure 5, in an embodiment the regional ITS operator Home Subscriber Server (HSS) 503 can contact the main ITS operator database 501 to authenticate the user equipment and retrieve the user profile associated therewith. In an embodiment, the user profile primarily defines the ITS services the user or the user equipment has subscribed to. During the authentication, the main ITS operator can inform the regional ITS operator HSS 503 about the user profile, which, in turn, can also inform the corresponding base station and the TAM associated therewith.

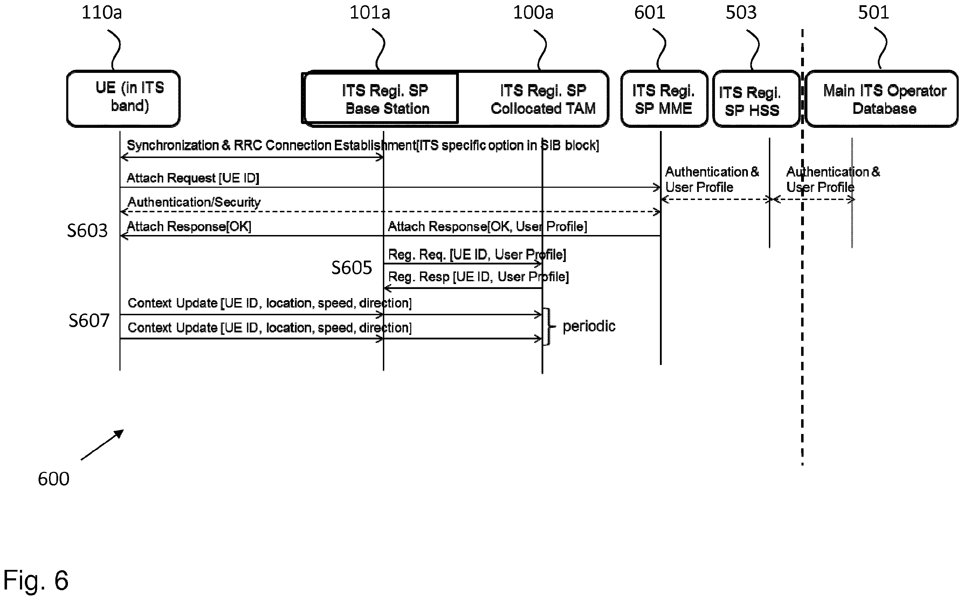

Figure 6 shows the main signaling exchange 600 during the initial attachment of the user equipment 110a (see step S603 of figure 6). As shown in figure 6, in an embodiment the UE 110a can be configured to send periodic context update messages, such as CAMs, to the registered TAM 100a (see step 607 of figure 6). In an embodiment, the information provided by a context update message can be information about the location, the speed and/or the direction of movement of the user equipment 110a. In an embodiment, the context update message can be used for different purposes by the TAM 100a. For example, the TAM 100a can create multicast groups based on this information and perform multicast transmissions (if this is required by ITS application) to certain multicast groups or the TAM 100a may perform unicast transmission (if it is required by ITS service) to a certain user equipment based on this context information.

In an embodiment, when the UE 110a generates ITS data, such as a CAM, DENM or the like, it sends the message to the TAM 100a, which is collocated to, i.e. associated with, the currently attached base station 101a. As already described above, the TAM 100a is configured to adopt a local and a global message distribution policy on the basis of the content and/or type of the ITS message received from the UE 110a. For instance, the TAM 100a can be configured to adopt a local message distribution policy by selecting a transmission mode, such as unicast, multicast or broadcast, selecting a transmission periodicity and/or selecting a QoS priority assignment. Moreover, in an embodiment, the TAM 100a can be configured to perform a radio resource management (RRM) of the collocated base station 101a.

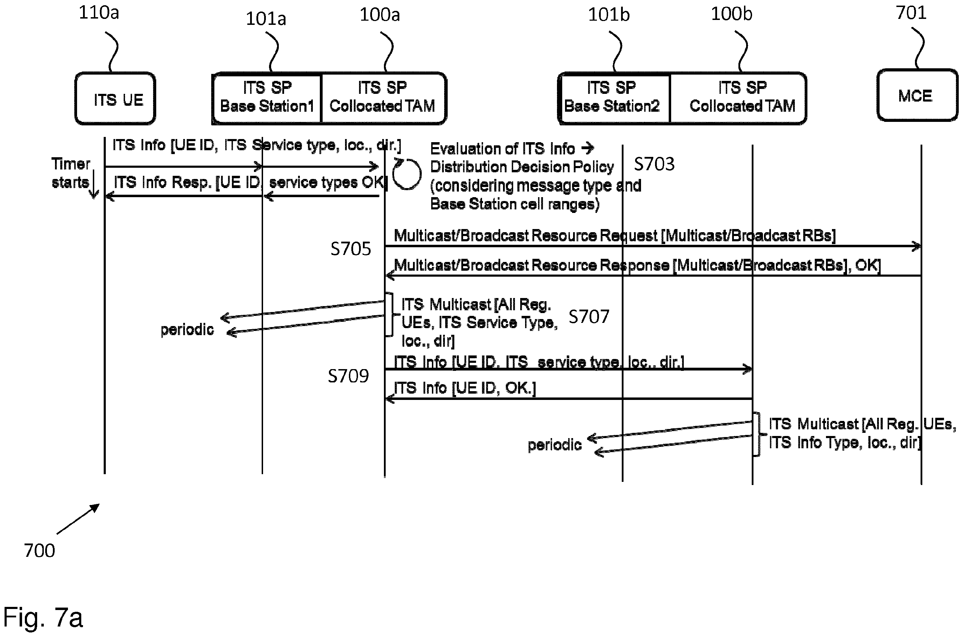

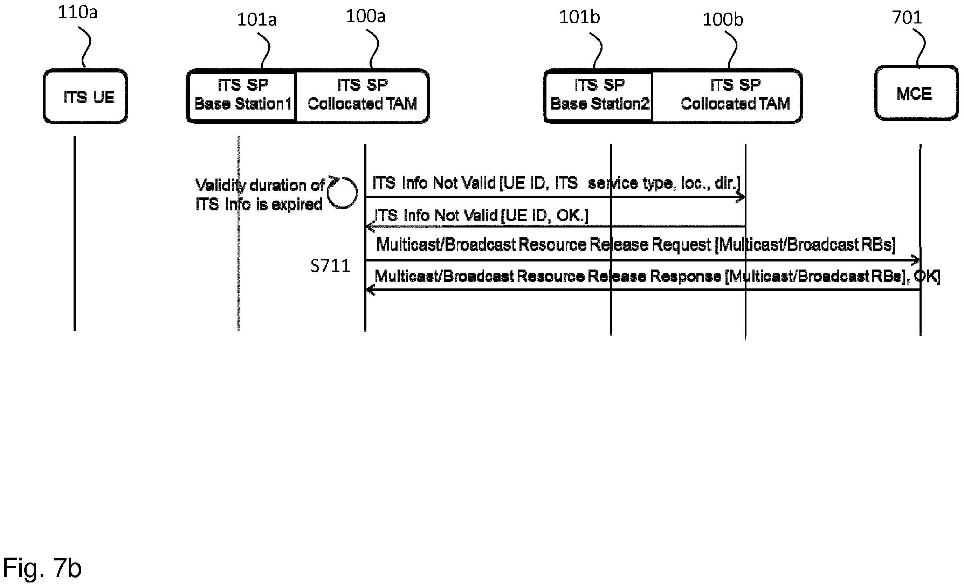

Figures 7a and 7b show a diagram illustrating a signaling exchange 700 during the distribution of messages between a first communication entity in the form of a TAM 100a and a second communication entity in the form of a TAM 100b according to an embodiment. In case of multicast and broadcast mode transmissions, the TAM 100a is configured to communicate with a Multi-Cell/Multicast Coordination Entity (MCE) 701 (see steps S705 of figure 7a). The MCE 701 is responsible for allocation of multicast/broadcast radio resources for eMBMS transmission to avoid using conflicting resource with the normal eMBMS transmissions. When the MCE 701 has allocated, for instance, one or more resource blocks to a certain ITS service, the MCE 701 can inform the corresponding TAM by means of a response message. In addition, the MCE 701 may be also configured to communicate the radio resource allocation information to other TAMs that will also distribute the ITS information (i.e., multi-cell ITS information distribution).

In an embodiment, the TAM 100 may also decide to use a unicast transmission instead of the multicast transmission shown in figures 7a and 7b based on the content and/or type of the ITS message provided by the UE 110a. In an embodiment, the ITS message can comprise a DENM, a trajectory exchange data, video data and the like.

After UE 110a is registered to a certain TAM, such as the TAM 100a shown in figures 7a and 7b, the TAM 100a also informs other neighboring TAMs, such as the TAM 100b shown in figures 7a and 7b, related to the registration of the UE 110a together with the user profile associated with the UE 110a (see steps S709 of figure 7a). In the end, in an embodiment every TAM knows which UE is registered to which TAM together with their user profiles. The TAMs, such as the TAMs 100a and 100b, are making use of this information when they are adopting a local and/or a global message distribution policy for distributing ITS messages to neighboring TAMs. In an embodiment, the multicast/broadcast resources can be released after usage (see steps S711 of figure 7b).

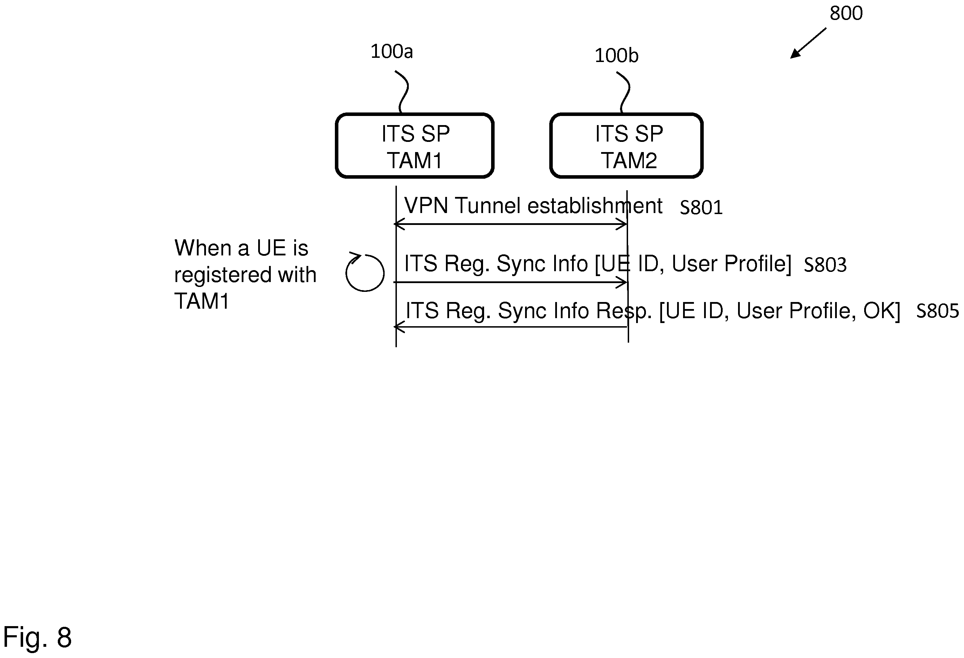

In case of a handover from a first base station to a second base station, the UE 110a is configured to be transferred from the corresponding first TAM, for instance TAM 100a, to the corresponding second TAM, for instance TAM 100b. In an embodiment, the handover will also trigger such a signaling exchange for UE update. An embodiment of such a signaling exchange 800 is shown in figure 8. After the establishment of a VPN tunnel in step S801 of figure 1, the first TAM 100a sends an identifier of the UE 110a along with the user profile to the second TAM 100b (see step S803 of figure 8), which acknowledges safe receipt of the data (see step S805 of figure 8). In an embodiment, such a signaling exchange can occur between the first TAM 100a and a plurality of further TAMs, including the TAM 100b shown in figure 8.

For the case that an X2 interface between two base stations is not available, the global message distributor 107 can be configured to forward the message to a further user equipment 110b of the plurality of user equipments 110a, b within the service area of the base station 101a associated with the communication entity 100a and to instruct the further user equipment 110b to forward the message to a further communication entity 100b associated with a further base station 101b, once the further user equipment is within the service area of the further base station 101b.

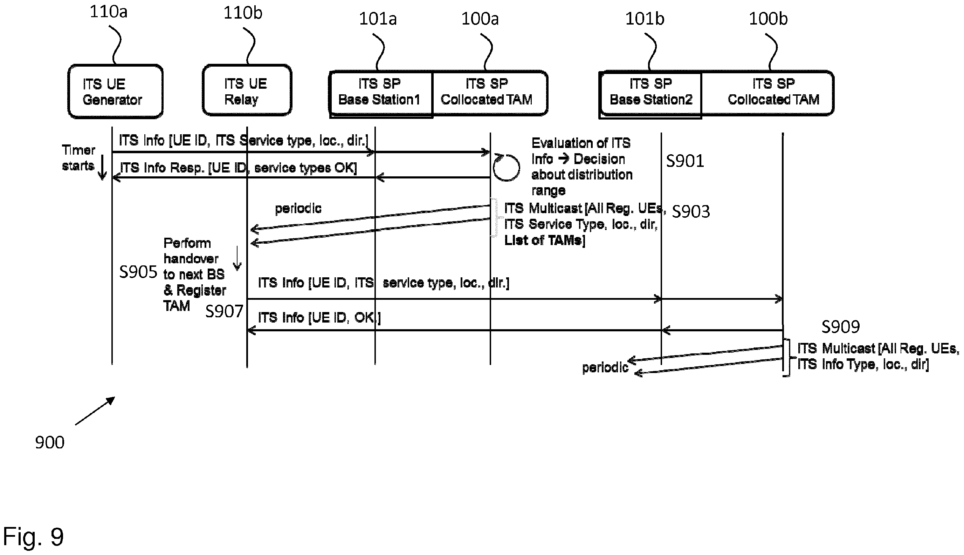

More specifically, when the UE 110b receives the ITS information from the base station 101a, it stores the information in its local cache until it attaches to the neighboring cell provided by the base station. After a new cell attachment procedure, the UE 110b delivers the ITS information to the communication entity in the form of the TAM 100b so that it can also deliver the information to the collocated base station 101b for transmission. The corresponding signaling exchange 900 according to an embodiment is shown in figure 9.

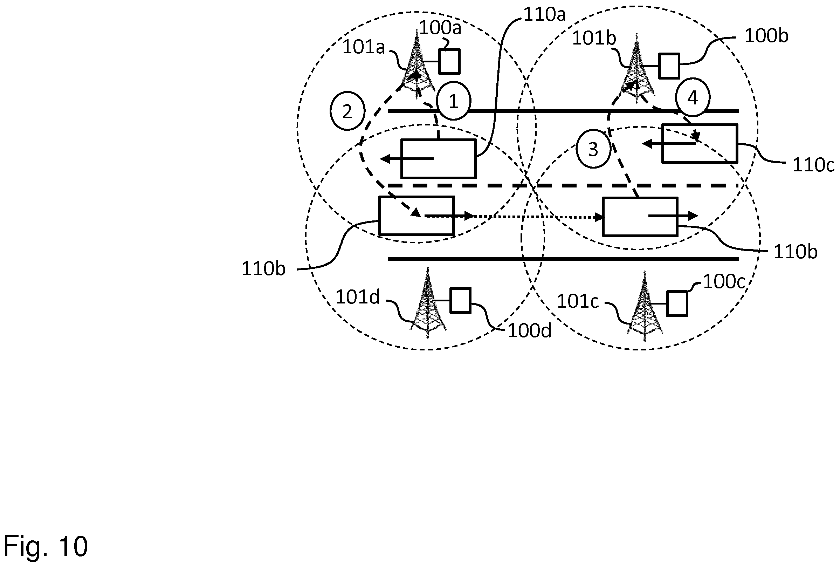

The embodiment shown in figure 9 is further illustrated by the scenario shown in figure 10. The UE 110b acts as a relay by carrying ITS information between the neighboring TAMs 100a and 100b. In an embodiment, the ITS information sent by TAM 100a also includes the list of other neighboring TAMs that need to transmit the ITS information. When the UE 110b performs a handover and delivers the message to the new TAM 100b, the new TAM 100b checks whether it is on the list being part of the message and performs a further transmission if needed.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention.

## Claims

1. A communication entity (100a) associated with a base station (101a), wherein the communication entity (100a) comprises:
an analyzer (103) configured to analyze the content and/or type of an intelligent transportation systems, ITS, message received by the base station (101a);
a local message distributor (105) configured to adopt a local message distribution policy for distributing the ITS message to at least one user equipment of a plurality of user equipments (110a, b) in a service area of the base station (101a) on the basis of the content and/or type of the ITS message;
a global message distributor (107) configured to adopt a global message distribution policy for distributing the ITS message to at least one of a plurality of further communication entities (100b-d) on the basis of the content and/or type of the ITS message, wherein each further communication entity (100b-d) is associated with a respective further base station (101b-d); and
the communication entity being **characterised by** the global message distributor (107) is further configured to forward the ITS message to a further user equipment (110b) of the plurality of user equipments (110a, b) within the service area of the base station (101a) associated with the communication entity (100a) and to instruct the further user equipment (110b) to forward the ITS message to a further communication entity (100b) associated with a further base station (101b) once the further user equipment is within the service area of the further base station (101b).

2. The communication entity (100a) of claim 1, wherein the analyzer (103) is configured to analyze the content and/or type of a message received by the base station (101a) from one of the plurality of user equipments (110a, b) or from one of the plurality of further communication entities (100b-d).

3. The communication entity (100a) of claim 1 or 2, wherein the local message distributor (105) is configured to adopt a local message distribution policy by distributing the ITS message periodically or event-based to at least one of the plurality of user equipments (110a, b).

4. The communication entity (100a) of any one of the preceding claims, wherein the local message distributor (105) is configured to adopt a local message distribution policy by assigning a priority to the ITS message and by distributing the message on the basis of the priority of the ITS message.

5. The communication entity (100a) of any one of the preceding claims, wherein the local message distributor (105) is configured to allocate radio resources of the base station (101a) on the basis of the local message distribution policy adopted by the local message distributor (105).

6. The communication entity (100a) of any one of the preceding claims, wherein the global message distributor (107) is further configured to retrieve information from a network management system about the locations and/or service areas of the further base stations (101b-d) and to adopt the global message distribution policy on the basis of the locations and/or service areas of the further base stations (101b-d).

7. The communication entity (100a) of any one of the preceding claims, wherein local message distributor (105) and/or the global message distributor (107) is further configured to coordinate the local message distribution policy and/or the global message distribution policy with a multi-cell/multicast coordination entity, MCE.

8. The communication entity (100a) of any one of the preceding claims, wherein the ITS message is in particular a cooperative awareness message, CAM, or a decentralized environmental notification message, DENM, and wherein the ITS message includes the following information: the location of the at least one user equipment (110a, b), an identifier of the at least one user equipment (110a, b), the direction of motion of the at least one user equipment (110a, b) and/or information about the ITS services the at least one user equipment (110a, b) has subscribed to.

9. The communication entity (100a) of claim 1 or 8, wherein the communication entity (100a) is further configured to retrieve a user profile associated with the at least one user equipment (110a, b).

10. The communication entity (100a) of claim 9, wherein the user profile associated with the at least one user equipment (110a, b) is communicated along with the ITS message and wherein the user profile defines the ITS services the at least one user equipment (110a, b) has subscribed to.

11. The communication entity (100a) of claim 9 or 10, wherein the global message distributor (107) is further configured to distribute the user profile to at least one of the plurality of further communication entities (100b-d) and to adopt a global message distribution policy for distributing the ITS message to at least one of the plurality of further communication entities (100b-d) on the basis of the type of the ITS message and the user profiles available at the communication entity (100a).

12. A communication network (150) comprising:
a plurality of communication entities (100a-d) according to any one of claims 1 to 11, wherein each communication entity (100a-d) is associated with a respective base station (101a-d) and wherein the plurality of base stations (101a-d) are configured to communicate by means of respective X2-C interfaces (120ac) and respective X2-D interfaces (120ad) with each other;
a plurality of first interfaces (125ac), wherein each first interface (125ac) is configured to establish a control data communication channel between a respective communication entity (100a-d) and its associated base station (101a-d); and
a plurality of second interfaces (125ad), wherein each second interface (125ad) is configured to establish a user data communication channel between a respective communication entity (100a-d) and its associated base station (101a-d).

13. A method (200) of operating a communication entity (100a) associated with a base station (101a), wherein the method (200) comprises the steps of:
analyzing (201) the content and/or type of a intelligent transportation systems, ITS, message received by the base station (101a);
adopting (203) a local message distribution policy for distributing the ITS message to at least one user equipment of a plurality of user equipments (110a, b) in a service area of the base station (101a) on the basis of the content and/or type of the ITS message; and adopting (205) a global message distribution policy for distributing the ITS message to at least one of a plurality of further communication entities (100b-d) on the basis of the content and/or type of the ITS message, wherein each further communication entity (100b-d) is associated with a respective further base station (101b-d),
the method being **characterised by** forwarding the ITS message to a further user equipment (101b) of the plurality of user equipments (110a, b) within the service area of the base station (101a) associated with the communication entity (100a) and instructing the further user equipment (110b) to forward the ITS message to a further communication entity (100b) associated with a further base station (101b) once the further user equipment is within the service area of the further base station (101b).

14. A computer program comprising program code for performing the method (200) of claim 13 when executed on a computer.

## Patentansprüche

1. Kommunikationsentität (100a), die mit einer Basisstation (101a) assoziiert ist, wobei die Kommunikationsentität (100a) umfasst:
eine Analyseeinrichtung (103), die ausgelegt ist, den Inhalt und/oder einen Typ einer Nachricht von intelligenten Transportsystemen, ITS, zu analysieren, die von der Basisstation (101a) empfangen wurde;
eine lokale Nachrichtenverteilungseinrichtung (105), die ausgelegt ist, eine lokale Nachrichtenverteilungsrichtlinie zum Verteilen der ITS-Nachricht an mindestens ein Endgerät einer Vielzahl von Endgeräten (110a, b) in einem Versorgungsbereich der Basisstation (101a) auf Grundlage des Inhalts und/oder des Typs der ITS-Nachricht anzuwenden;
eine globale Nachrichtenverteilungseinrichtung (107), die ausgelegt ist, eine globale Nachrichtenverteilungsrichtlinie zum Verteilen der ITS-Nachricht an mindestens eine von einer Vielzahl von weiteren Kommunikationsentitäten (100b-d) auf Grundlage des Inhalts und/oder Typs der ITS-Nachricht anzuwenden, wobei jede weitere Kommunikationsentität (100b-d) mit einer jeweiligen weiteren Basisstation (101b-d) assoziiert ist; und
die Kommunikationsentität **dadurch gekennzeichnet ist, dass**
die globale Nachrichtenverteilungseinrichtung (107) ferner ausgelegt ist, die ITS-Nachricht an ein weiteres Endgerät (110b) der Vielzahl von Endgeräten (110a, b) innerhalb des Versorgungsbereichs der mit der Kommunikationsentität (100a) assoziierten Basisstation (101a) weiterzuleiten und das weitere Endgerät (110b) anzuweisen, die ITS-Nachricht an eine weitere Kommunikationsentität (100b) weiterzuleiten, die mit einer weiteren Basisstation (101b) assoziiert ist, sobald sich das weitere Endgerät innerhalb des Versorgungsbereichs der weiteren Basisstation (101b) befindet.

2. Kommunikationsentität (100a) nach Anspruch 1, wobei die Analyseeinrichtung (103) ausgelegt ist, den Inhalt und/oder den Typ einer von der Basisstation (101a) von einem der Vielzahl der Endgeräte (110a, b) oder von einer der Vielzahl der weiteren Kommunikationsentitäten (100b-d) empfangenen Nachricht zu analysieren.

3. Kommunikationsentität (100a) nach Anspruch 1 oder 2, wobei die lokale Nachrichtenverteilungseinrichtung (105) ausgelegt ist, eine lokale Nachrichtenverteilungsrichtlinie durch periodisches oder ereignisbasiertes Verteilen der ITS-Nachricht an mindestens eines der Vielzahl der Endgeräte (110a, b) anzuwenden.

4. Kommunikationsentität (100a) nach einem der vorangehenden Ansprüche, wobei die lokale Nachrichtenverteilungseinrichtung (105) ausgelegt ist, eine lokale Nachrichtenverteilungsrichtlinie durch Zuweisen einer Priorität zur ITS-Nachricht und durch Verteilen der Nachricht auf Grundlage der Priorität der ITS-Nachricht anzuwenden.

5. Kommunikationsentität (100a) nach einem der vorangehenden Ansprüche, wobei die lokale Nachrichtenverteilungseinrichtung (105) ausgelegt ist, Funkressourcen der Basisstation (101a) auf Grundlage der von der lokalen Nachrichtenverteilungseinrichtung (105) angewandten lokalen Nachrichtenverteilungsrichtlinie zuzuordnen.

6. Kommunikationsentität (100a) nach einem der vorangehenden Ansprüche, wobei die globale Nachrichtenverteilungseinrichtung (107) ferner ausgelegt ist, Informationen von einem Netzwerkverwaltungssystem über die Positionen und/oder Versorgungsbereiche der weiteren Basisstationen (101b-d) abzurufen und die globale Nachrichtenverteilungsrichtlinie auf Grundlage der Positionen und/oder Versorgungsbereiche der weiteren Basisstationen (101b-d) anzuwenden.

7. Kommunikationsentität (100a) nach einem der vorangehenden Ansprüche, wobei die lokale Nachrichtenverteilungseinrichtung (105) und/oder die globale Nachrichtenverteilungseinrichtung (107) ferner ausgelegt ist, die lokale Nachrichtenverteilungsrichtlinie und/oder die globale Nachrichtenverteilungsrichtlinie mit einer Mehrzellen-/"Multicast"-Koordinationsentität, MCE, zu koordinieren.

8. Kommunikationsentität (100a) nach einem der vorangehenden Ansprüche, wobei die ITS-Nachricht insbesondere eine kooperative Kenntnisnachricht, CAM, oder eine dezentralisierte Umgebungsmitteilung, DENM, ist, und wobei die ITS-Nachricht die folgenden Informationen enthält: die Position des mindestens einen Endgeräts (110a, b), eine Kennung des mindestens einen Endgeräts (110a, b), die Bewegungsrichtung des mindestens einen Endgeräts (110a, b) und/oder Informationen über die ITS-Dienste, die das mindestens eine Endgerät (110a, b) abonniert hat.

9. Kommunikationsentität (100a) nach Anspruch 1 oder 8, wobei die Kommunikationsentität (100a) ferner ausgelegt ist, ein Benutzerprofil abzurufen, das mit dem mindestens einen Endgerät (110a, b) assoziiert ist.

10. Kommunikationsentität (100a) nach Anspruch 9, wobei das mit dem mindestens einen Endgerät (110a, b) assoziierte Benutzerprofil zusammen mit der ITS-Nachricht kommuniziert wird und wobei das Benutzerprofil die ITS-Dienste definiert, die das mindestens eine Endgerät (110a, b) abonniert hat.

11. Kommunikationsentität (100a) nach Anspruch 9 oder 10, wobei die globale Nachrichtenverteilungseinrichtung (107) ferner ausgelegt ist, das Benutzerprofil an mindestens eine der Vielzahl von weiteren Kommunikationsentitäten (100b-d) zu verteilen und eine globale Nachrichtenverteilungsrichtlinie zum Verteilen der ITS-Nachricht an mindestens eine der Vielzahl von weiteren Kommunikationsentitäten (100b-d) auf Grundlage des Typs der ITS-Nachricht und der an der Kommunikationsentität (100a) verfügbaren Benutzerprofile anzuwenden.

12. Kommunikationsnetzwerk (150), umfassend:
eine Vielzahl von Kommunikationsentitäten (100a-d) nach einem der Ansprüche 1 bis 11, wobei jede Kommunikationsentität (100a-d) mit einer jeweiligen Basisstation (101a-d) assoziiert ist und wobei die Vielzahl von Basisstationen (101a-d) ausgelegt sind, mithilfe jeweiliger X2-C-Schnittstellen (120ac) und jeweiliger X2-D-Schnittstellen (120ad) miteinander zu kommunizieren;
eine Vielzahl von ersten Schnittstellen (125ac), wobei jede erste Schnittstelle (125ac) ausgelegt ist, einen Steuerdatenkommunikationskanal zwischen einer jeweiligen Kommunikationsentität (100a-d) und ihrer assoziierten Basisstation (101a-d) einzurichten; und
eine Vielzahl von zweiten Schnittstellen (125ad), wobei jede zweite Schnittstelle (125ad) ausgelegt ist, einen Benutzerdatenkommunikationskanal zwischen einer jeweiligen Kommunikationsentität (100a-d) und ihrer assoziierten Basisstation (101a-d) einzurichten.

13. Verfahren (200) zum Betreiben einer Kommunikationsentität (100a), die mit einer Basisstation (101a) assoziiert ist, wobei das Verfahren (200) die Schritte umfasst zum:
Analysieren (201) des Inhalts und/oder Typs einer Nachricht von intelligenten Transportsystemen, ITS, die von der Basisstation (101a) empfangen wurde;
Anwenden (203) einer lokalen Nachrichtenverteilungsrichtlinie zum Verteilen der ITS-Nachricht an mindestens ein Endgerät einer Vielzahl von Endgeräten (110a, b) in einem Versorgungsbereich der Basisstation (101a) auf Grundlage des Inhalts und/oder des Typs der ITS-Nachricht; und
Anwenden (205) einer globale Nachrichtenverteilungsrichtlinie zum Verteilen der ITS-Nachricht an mindestens eine von einer Vielzahl von weiteren Kommunikationsentitäten (100b-d) auf Grundlage des Inhalts und/oder Typs der ITS-Nachricht, wobei jede weitere Kommunikationsentität (100b-d) mit einer jeweiligen weiteren Basisstation (101b-d) assoziiert ist,
wobei das Verfahren durch Weiterleiten der ITS-Nachricht an ein weiteres Endgerät (101b) der Vielzahl von Endgeräten (110a, b) innerhalb des Versorgungsbereichs der mit der Kommunikationsentität (100a) assoziierten Basisstation (101a) und
Anweisen des weiteren Endgeräts (110b) gekennzeichnet ist, die ITS-Nachricht an eine weitere Kommunikationsentität (100b) weiterzuleiten, die mit einer weiteren Basisstation (101b) assoziiert ist, sobald sich das weitere Endgerät innerhalb des Versorgungsbereichs der weiteren Basisstation (101b) befindet.

14. Computerprogramm, das Programmcode zum Durchführen des Verfahrens (200) nach Anspruch 13 umfasst, wenn es auf einem Computer ausgeführt wird.

## Revendications

1. Entité de communication (100a) associée à une station de base (101a), dans laquelle l'entité de communication (100a) comprend :
un analyseur (103) configuré pour analyser le contenu et/ou le type d'un message de systèmes de transport intelligents (ITS) reçu par la station de base (101a) ;
un distributeur de message local (105) configuré pour adopter une politique de distribution locale de message pour distribuer le message de systèmes ITS à au moins un équipement utilisateur d'une pluralité d'équipements utilisateurs (110a, 110b) dans une zone de service de la station de base (101a) sur la base du contenu et/ou du type du message de système ITS ;
un distributeur de message global (107) configuré pour adopter une politique de distribution globale de message pour distribuer le message de systèmes ITS à au moins une autre entité de communication d'une pluralité d'autres entités de communication (100b à 100d) sur la base du contenu et/ou du type du message de systèmes ITS, dans laquelle chaque autre entité de communication (100b à 100d) est associée à une autre station de base respective (101b à 101d) ; et
l'entité de communication étant **caractérisée par**
le distributeur de message global (107) est en outre configuré pour transmettre le message de systèmes ITS à un autre équipement utilisateur (110b) de la pluralité d'équipements utilisateurs (110a, 110b) à l'intérieur de la zone de service de la station de base (101a) associée à l'entité de communication (100a) et pour donner comme instruction à l'autre équipement utilisateur (110b) de transmettre le message de systèmes ITS à une autre entité de communication (100b) associée à une autre station de base (101b) une fois que l'autre équipement utilisateur se trouve à l'intérieur de la zone de service de l'autre station de base (101b).

2. Entité de communication (100a) selon la revendication 1, dans laquelle l'analyseur (103) est configuré pour analyser le contenu et/ou le type d'un message reçu par la station de base (101a) en provenance d'un équipement utilisateur de la pluralité d'équipements utilisateurs (110a, 110b) ou en provenance d'une autre entité de communication de la pluralité d'autres entités de communication (100b à 100d).

3. Entité de communication (100a) selon la revendication 1 ou 2, dans laquelle le distributeur de message local (105) est configuré pour adopter une politique de distribution locale de message en distribuant le message de systèmes ITS de manière périodique ou en se basant sur un événement à au moins un équipement utilisateur de la pluralité d'équipements utilisateurs (110a, 110b).

4. Entité de communication (100a) selon l'une quelconque des revendications précédentes, dans laquelle le distributeur de message local (105) est configuré pour adopter une politique de distribution locale de message en attribuant une priorité au message de systèmes ITS et en distribuant le message sur la base de la priorité du message de systèmes ITS.

5. Entité de communication (100a) selon l'une quelconque des revendications précédentes, dans laquelle le distributeur de message local (105) est configuré pour attribuer des ressources radio de la station de base (101a) sur la base de la politique de distribution locale de message adoptée par le distributeur de message local (105).

6. Entité de communication (100a) selon l'une quelconque des revendications précédentes, dans laquelle le distributeur de message global (107) est en outre configuré pour récupérer des informations à partir d'un système de gestion de réseau concernant les emplacements et/ou les zones de service des autres stations de base (101b à 101d) et pour adopter la politique de distribution globale de message sur la base des emplacements et/ou des zones de service des autres stations de base (101b à 101d).

7. Entité de communication (100a) selon l'une quelconque des revendications précédentes, dans laquelle le distributeur de message local (105) et/ou le distributeur de message global (107) sont en outre configurés pour coordonner la politique de distribution locale de message et/ou la politique de distribution globale de message avec une entité de coordination multicellule/multidiffusion (MCE).

8. Entité de communication (100a) selon l'une quelconque des revendications précédentes, dans laquelle le message de systèmes ITS est, en particulier, un message de sensibilisation coopérative (CAM) ou un message de notification environnementale décentralisée (DENM) et dans laquelle le message de systèmes ITS comprend les informations suivantes : l'emplacement du ou des équipements utilisateurs (110a, 110b), un identifiant du ou des équipements utilisateurs (110a, 110b), la direction de mouvement du ou des équipements utilisateurs (110a, 110b) et/ou des informations concernant les services de systèmes ITS que le ou les équipements utilisateurs (110a, 110b) ont souscrits.

9. Entité de communication (100a) selon la revendication 1 ou 8, dans laquelle l'entité de communication (100a) est en outre configurée pour récupérer un profil d'utilisateur associé à ou aux équipements utilisateurs (110a, 110b).

10. Entité de communication (100a) selon la revendication 9, dans laquelle le profil d'utilisateur associé à ou aux équipements utilisateurs (110a, 110b) est communiqué conjointement avec le message de systèmes ITS et dans laquelle le profil d'utilisateur définit les services de systèmes ITS auxquels le ou les équipements utilisateurs (110a, 110b) ont souscrits.

11. Entité de communication (100a) selon la revendication 9 ou 10, dans laquelle le distributeur de message global (107) est en outre configuré pour distribuer le profil d'utilisateur à au moins une autre entité de communication de la pluralité d'autres entités de communication (100b à 100d) et pour adopter une politique de distribution globale de message pour distribuer le message de systèmes ITS à au moins une autre entité de communication de la pluralité d'autres entités de communication (100b à 100d) sur la base du type de message de systèmes ITS et des profils d'utilisateur disponibles au niveau de l'entité de communication (100a).

12. Réseau de communication (150) comprenant :
une pluralité d'entités de communication (100a à 100d) selon l'une quelconque des revendications 1 à 11, dans lequel chaque entité de communication (100a à 100d) est associée à une station de base respective (101a à 101d) et dans lequel la pluralité de stations de base (101a à 101d) sont configurées pour communiquer au moyen d'interfaces X2-C respectives (120ac) et d'interfaces X2-D respectives (120ad) les unes avec les autres ;
une pluralité de premières interfaces (125ac), dans lequel chaque première interface (125ac) est configurée pour établir un canal de communication de données de commande entre une entité de communication respective (100a à 100d) et sa station de base associée (101a à 101d) ; et
une pluralité de secondes interfaces (125ad), dans lequel chaque seconde interface (125ad) est configurée pour établir un canal de communication de données d'utilisateur entre une entité de communication respective (100a à 100d) et sa station de base associée (101a à 101d).

13. Procédé (200) de fonctionnement d'une entité de communication (100a) associée à une station de base (101a), dans lequel le procédé (200) comprend les étapes consistant :
à analyser (201) le contenu et/ou le type d'un message de systèmes de transport intelligents (ITS) reçu par la station de base (101a) ;
à adopter (203) une politique de distribution locale de message pour distribuer le message de systèmes ITS à au moins un équipement utilisateur d'une pluralité d'équipements utilisateurs (110a, 110b) dans une zone de service de la station de base (101a) sur la base du contenu et/ou du type du message de système ITS ; et
à adopter (205) une politique de distribution globale de message pour distribuer le message de systèmes ITS à au moins une autre entité de communication d'une pluralité d'autres entités de communication (100b à 100d) sur la base du contenu et/ou du type du message de systèmes ITS, dans lequel chaque autre entité de communication (100b à 100d) est associée à une autre station de base respective (101b à101d);
le procédé étant **caractérisé en ce qu'**il consiste à transmettre le message de systèmes ITS à un autre équipement utilisateur (101b) de la pluralité d'équipements utilisateurs (110a, 110b) à l'intérieur de la zone de service de la station de base (101a) associée à l'entité de communication (100a) et à donner comme instruction à l'autre équipement utilisateur (110b) de transmettre le message de systèmes ITS à une autre entité de communication (100b) associée à une autre station de base (101b) une fois que l'autre équipement utilisateur se trouve à l'intérieur de la zone de service de l'autre station de base (101b).

14. Programme d'ordinateur comprenant un code de programme pour réaliser le procédé (200) selon la revendication 13 lorsqu'il est exécuté sur un ordinateur.
